(19) Europäisches Patentamt
European Patent Office
Office européen des brevets

(11) Veröffentlichungsnummer : **0 514 390 B1**

(12) **EUROPÄISCHE PATENTSCHRIFT**

(45) Veröffentlichungstag der Patentschrift :
16.02.94 Patentblatt 94/07

(51) Int. Cl.$^5$ : **G06F 15/70**

(21) Anmeldenummer : 91902097.4

(22) Anmeldetag : 12.12.90

(86) Internationale Anmeldenummer :
PCT/EP90/02157

(87) Internationale Veröffentlichungsnummer :
WO 91/12584 22.08.91 Gazette 91/19

(54) VERFAHREN ZUR BESTIMMUNG DER MOMENTANEN LAGE UND FORM VON BEWEGTEN OBJEKTEN UND ZU DEREN ANZEIGE ALS BINÄRBILD.

(30) Priorität : 09.02.90 EP 90102597

(43) Veröffentlichungstag der Anmeldung :
25.11.92 Patentblatt 92/48

(45) Bekanntmachung des Hinweises auf die
Patenterteilung :
16.02.94 Patentblatt 94/07

(84) Benannte Vertragsstaaten :
DE FR GB

(56) Entgegenhaltungen :
THE SIXTH SCANDINAVIAN CONFERENCE
ON IMAGE ANALYSIS, 19. JUNI 1989, (OULU,
FI), K.P. KARMANN ET AL.: "DETECTION AND
TRACKING OF MOVING OBJECTS BY ADAP-
TIVE BACKGROUND EXTRACTION", SEITEN
1051-1058
PROCEEDINGS OF THE TENTH DAGM SYM-
POSIUM, 27. SEPTEMBER 1988, (ZÜRICH, CH),
A. GUNZINGER ET AL.:
"DATENFLUSSRECHNER ZUR ECHTZEIT-
BILDVERARBEITUNG: ANWENDUNGEN",
SEITEN 76-82
PROCEEDINGS OF THE 5TH, SCANDINAVIAN
CONFERENCE ON IMAGE ANALYSIS, JUNI
1987, (STOCKHOLM, SV) J. WIKLUND ET AL.:
"IMAGE SEQUENCE ANALYSIS FOR OBJECT
TRACKING", SEITEN 641-648
APPLIED OPTICS, BAND 24, NR. 10, 15. MAI
1985, (NEW YORK, US), B.E.A. SALEH ET AL.:
"IMAGE CONSTRUCTION: OPTIMUM AMPLI-
TUDE AND PHASE MASKS IN PHOTOLITHO-
GRAPHY", SEITEN 1432-1437

(56) Entgegenhaltungen :
IEEE TRANSACTIONS ON PATTERN ANALY-
SIS AND MACHINE INTELLIGENCE, BAND
PAMI4, NR. 6, NOVEMBER 1982, (NEW YORK,
US), G.R. LEGTERS ET AL.: "A MATHEMATI-
CAL MODEL FOR COMPUTER IMAGE
TRACKING", SEITEN 583-594

(73) Patentinhaber : SIEMENS
AKTIENGESELLSCHAFT
Wittelsbacherplatz 2
D-80333 München (DE)

(72) Erfinder : KARMANN, Klaus-Peter
Strassbergerstr. 8
D-8000 München 40 (DE)
Erfinder : VON BRANDT, Achim
Am Eschbichl 7 a
D-8000 München 81 (DE)
Erfinder : GERL, Rainer
St. Georg 20
D-8222 Ruhpolding (DE)

## Beschreibung

Bei verschiedenen Anwendungen des maschinellen Sehens, wie z.B. Szenenanalyse, autonome Fahrzeugsteuerung, Bewachungsaufgaben, kommt es darauf an, durch Auswertung einer zeitlichen Folge digitaler Bilder bewegte Objekte zu entdecken, ihre Form und Lage zu bestimmen und ihre Bewegung zu verfolgen. Dazu werden die bewegten Objekte mit Hilfe einer unbewegten Kamera aufgenommen und dann die von der Kamera abgegebenen Bilder der bewegten Objekte untersucht. Darin wird in einem ersten Schritt die momentane Lage und Form (Detektion) der bewegten Objekte festgestellt und anschließend ist eine Segmentierung erforderlich, d.h. die Erkennung der Form und der Ränder der bewegten Objekte.

Bewegte Objekte unterscheiden sich von ihrer unbewegten Umgebung in erster Linie durch die zeitlichen Intensitätsänderungen, die durch ihre Bewegung hervorgerufen werden. Selbst wenn die Objekte sich relativ langsam bewegen, sind die durch ihre Bewegung hervorgerufenen Intensitätsänderungen fast immer schnell im Vergleich zu Beleuchtungsänderungen oder Änderungen der Oberflächeneigenschaften der Umgebung. Die Detektion der bewegten Objekte läuft daher auf die Trennung der schnellen von den langsamen dynamischen Prozessen einer Bewegtbildfolge hinaus.

Es sind bereits Verfahren bekannt geworden, die zeigen, wie die momentane Lage und Form von solchen bewegten Objekten bestimmt werden kann. Diese bekannten Verfahren lassen sich in zwei Klassen einteilen.

Eine erste Klasse von Verfahren basiert auf der Auswertung von Differenzbildern aus den zeitlich aufeinanderfolgenden Bildern der Folge (z.B. P. Spoer "Moving Object Detection by Temporal Frame Difference Accumulation" in Digital Signal Processing 84, V. Cappellini and A. G. Constantinides (eds.) Florence 1984, S. 900-907; J. Wicklund, G. H. Granlund "Image Sequence Analysis for Object Tracking" Proceedings of the 5th Scand. Conference on Image Analysis, Stockholm, Juni 1987, S.641-648). Diese Differenzbilder werden einer Schwelle unterworfen, wodurch ein der Schwellwertentscheidung entsprechendes Binärbild erzeugt wird. Das Binärbild enthält im allgemeinen noch ein Restrauschen (Rauschpixel), das durch geeignete Filteroperationen (Medianfilter, Tiefpaß, Löschen aller Segmente, deren Größe unterhalb einer Schwelle liegt) eliminiert werden kann.

Ziel der Verfahren ist die Trennung der bewegten Bildbereiche vom Hintergrund und die Gewinnung von Objektmasken, deren Segmente die Form und Lage der Objekte kenntlich machen. Zwei Probleme führen dabei im allgemeinen zu Schwierigkeiten:

1. Selbst unter idealen Bedingungen (völlige Rauschfreiheit, Objekte mit kontrastreichen, durchgehenden Texturen, die sich deutlich vom Hintergrund abheben) stehen die Segmente der so erzeugten Objektmasken in keinem einfachen, auf eindeutige Weise rekonstruierbaren Zusammenhang mit der Anzahl der Objekte und ihrer Form. Das so erhaltene Binärbild entspricht vielmehr der Vereinigungsmenge zweier Binärbilder, welche die Objektpositionen zu zwei verschiedenen Zeitpunkten wiedergeben.

2. Gebiete mit geringen Helligkeitsgradienten im Inneren von Objekten führen zu Löchern in den entsprechenden Segmenten der Objektmasken. Ein Objekt kann auch in mehrere Segmente zerfallen.

Um diese Schwierigkeiten zu überwinden, ist eine zweite Klasse von Verfahren vorgeschlagen worden (z. B. von A. Gunzinger, S. Mathis, W. Guggenbühl "Datenflußrechner zur Echtzeitbildverarbeitung" Proceedings of the 10th DAGM-Symposium, Zürich 1988, S. 76-82; K.P. Karmann, A.v.Brandt "Detection and tracking of moving object by adaptive background extraction", Proceedings of the 6th Scand. Conference on Image Analysis, Oulu, Finnland, 19.-22-Juni 1989, S. 1051-1058), bei dem das zu analysierende Bild mit einem Referenzbild verglichen wird, welches sich an die langsamen Intensitätsänderungen der Bildfolge mehr oder weniger gut adaptiert, die bewegten Objekte aber nicht oder nur stark unterdrückt enthält. Das adaptive Referenzbild wird dabei zeitlich rekursiv aus der ursprünglichen Bildfolge berechnet. Die vorgeschlagenen Verfahren unterscheiden sich durch die Art der Steuerung der Zeitabhängigkeit des Filterkoeffizienten eines Filters, das zur Erzeugung der Referenzbildfolge verwendet wird. Dabei ergeben sich folgende Schwierigkeiten:

1. Ist im einfachen Fall die Rekursion unabhängig von Ort und Zeit, dann gelingt die Trennung zwischen schnellen und langsamen Veränderungen nicht mit ausreichender Schärfe. Langsame Bewegtobjekte gelangen in das Referenzbild und bleiben unerkannt. Beleuchtungsänderung durch Bewölkung können hingegen zu fehlerhaften Detektionen führen.

2. Durch eine geeignete Steuerung der Rekursion in Abhängigkeit von den Ergebnissen der Detektion gelingt es, die Trennung zwischen bewegten Objekten und anderen Helligkeitsänderungen - und damit die Zuverlässigkeit des Detektionsverfahrens - entscheidend zu verbessern. Dafür entstehen aber andere Probleme. Fehldetektionen mit großen Differenzen stabilisieren sich selbst. Unter ungünstigen Bedingungen kann das Detektionsverfahren durch größer werdende Artefakte in der Objektmaske völlig geblendet werden.

Die der Erfindung zugrundeliegende Aufgabe besteht darin, ein Verfahren anzugeben, das die oben angegebenen Probleme löst. Diese Aufgabe wird bei einem Verfahren zur Bestimmung der momentanen Lage und Form von bewegten Objekten und deren Anzeige als Binärbild gemäß den im Anspruch 1 angegebenen Schritten gelöst.

Das erfindungsgemäße Verfahren gemäß Anspruch 1 arbeitet auch mit einer zeitlich rekursiv berechneten Folge von Referenzbildern, die sich an langsame Intensitätsänderungen adaptieren. Dabei werden die bewegten Objekte weitgehend aus dem Referenzbild eliminiert.

Im Gegensatz zu den beschriebenen Verfahren der zweiten Klasse wird die Rekursion jedoch nicht direkt über die Objektmaske gesteuert, sondern hängt von der nicht nicht binarisierten Differenz zwischen dem laufenden Bild und dem Referenzbild ab. Dadurch wird vermieden, daß Fehldetektionen weitere Fehldetektionen nach sich ziehen.

Weiterhin werden beim erfindungsgemäßen Verfahren die Bewegtobjekte mit Hilfe eines statistisch optimalen Entscheidungskriteriums detektiert, dessen Parameter laufend aus der Bildfolge gemessen werden. Dadurch paßt sich das erfindungsgemäße Verfahren automatisch dem momentanen Kamerarauschen an.

Das erfindungsgemäße Verfahren ist hinsichtlich seiner Robustheit gegen Störungen, z.B. Rauschen, Kontraständerungen, Änderungen des Hintergrundes usw., und seiner Leistungsfähigkeit, z.B. Qualität der Objektsegmentierung, Fehldetektionswahrscheinlichkeit, den bekannten Verfahren deutlich überlegen. Es wird damit den Anforderungen an Systeme für den breiten kommerziellen Einsatz gerecht.

Weiterbildungen der Erfindung ergeben sich aus den Unteransprüchen.

Anhand eines bevorzugten Ausführungsbeispieles wird die Erfindung weiter erläutert.

Zur Berechnung des adaptiven Referenzbildes B (k, p) werden die Bilder einer Eingangsbildfolge I (k, p) zeitlich rekursiv und örtlich selektiv über die Zeit k gemittelt. k ist die Zeit, p ein einzelner Bildpunkt eines Bildes. Das laufende Bild I (k, p) wird mit dem Referenzbild B (k, p) verglichen, indem die Differenz zwischen I und B gebildet wird:

$$D (k, p) = I (k, p) - B (k, p). \quad (1)$$

Entsprechend der Bildfolge und der Referenzbildfolge entsteht somit eine Differenzbildfolge aus Differenzbildern. Diese Differenzbildfolge wird nun einer Schwelle th unterworfen, um ein binarisiertes Bild M (k, p) zu erzeugen:

$$M (k, p) = I \text{ wenn } (D(k, p))^2 > th, \text{ sonst } 0. \quad (2)$$

Dieses binarisierte Bild ist die Objektmaske und stellt die Lagen und Formen der Bewegtobjekte in der Bildebene dar. Die Objektmaske wird dann weiterbehandelt, um die bewegten Objekte und eventuell deren Eigenschaften zu ermitteln. Die weiteren Schritte sind nicht Gegenstände der Erfindung und werden darum nicht erläutert.

Das Referenzbild wird insbesondere auch vom Rauschen der Kamera beeinflußt. Zu den einzelnen Bildern der Bildfolge werden dementsprechend vom Rauschen abhängige Varianzbilder erzeugt, die eine Varianzbilderfolge bilden. Die Varianzbilder V (k, p) können zeitlich rekursiv aus den Differenzbildern D (k, p) erzeugt werden. Dies geschieht über denselben Filterkoeffizienten g (k, p) mit dessen Hilfe auch das Referenzbild für die nächste Detektion aktualisiert wird. Der Filterkoeffizient g (k, p) ergibt sich aus folgender Formel:

$$g (k, p) = \frac{V (k, p)}{(D (k,p))^2 + V (k, p)} \quad (3)$$

Mit Hilfe des Filterkoeffizienten kann das Varianzbild V für den Zeitpunkt k+I berechnet werden nach der folgenden Formel:

$$V (k + I, p) = (I - g (k, p)) . V (k, p) + S (k) \quad (4)$$

S(k) wird Kontrollparameter genannt und dient zur Steuerung der Adaptivität des Referenzbildes B (k, p). Er kann wahlweise als Entwurfsparameter vorgegeben sein oder aus den Bilddaten, z.B. durch eine Mittelung des quadrierten Differenzbildes D (k, p) über alle Bildpunkte gemessen werden. Der Kontrollparameter kann z.B. gleich der mittleren Rauschleistung der Kamera gewählt werden. Zu Beginn der rekursiven Berechnung der Varianzbilder muß eine Anfangsvarianz gewählt werden, die dem Vorwissen über die Kenntnis des Referenzbildes entspricht. Ihr Wert liegt typischerweise erheblich über der Rauschvarianz der Kamera. Die nachfolgenden Varianzbilder werden dann zeitlich rekursiv für jeden Bildpunkt nach der angegebenen Formel berechnet.

Anstelle eines Varianzbildes V (k,p) kann in einer einfacheren Version auch eine über alle Bildpunkte gemittelte Varianz zeitlich rekursiv aus sich selbst und der Differenzbildfolge erzeugt werden nach der Formel:

$$V (k + I) = (I - g (k)). V (k) + S (k) \quad (4a)$$

Mit Hilfe des Filterkoeffizienten g und dem Differenzbild läßt sich nunmehr das Referenzbild ermitteln nach der Formel

$$B (k + I, p) = B (k, p) + g (k, p) . (I (k, p) - B (k,p)) \quad (5)$$

Auch hier muß ein Anfangsreferenzbild vorgegeben werden, um die zeitlich rekursive Berechnung der folgenden Referenzbilder zu ermöglichen. Dieses Anfangsreferenzbild kann wiederum dem Vorwissen entnommen werden, z.B. kann das erste Bild I dazu verwendet werden.

Durch die zeitlich rekursive Berechnung der Referenzbilder wird nach kurzer Zeit ein Referenzbild B erzeugt, das sehr gut dem Hintergrund der Bilder entspricht. Wenn z.B. in dem aufgenommenen Bild keine bewegten Objekte enthalten sind, somit nur Hintergrund dargestellt ist, dann ist das Bild I gleich dem Referenzbild B und entsprechend der Formel ergibt sich, daß das Referenzbild zur Zeit K+I gleich dem Referenzbild zur Zeit k ist.

Zur Binarisierung der Differenzbilder ist eine Schwelle th erforderlich, denn die quadrierten Differenzbilder werden punktweise mit dieser Schwelle verglichen, und es wird nur dann eine binäre "1" erzeugt, wenn das quadrierte Differenzbild diese Schwelle überschreitet, sonst eine binäre "0". Es ist sehr vorteilhaft, wenn auch dieser Schwellwert th von der Varianz abhängt. Eine Möglichkeit, den Schwellwert th zu berechnen, ergibt sich aus der folgenden Formel:

$$th = 2 \cdot V(k, p) \cdot \ln \frac{W}{\sqrt{2\pi} \cdot V(k, p)} \quad (6)$$

Die im Zähler verwendete Konstante W kann berechnet werden nach

$$\frac{P(\text{kein Objekt}) \cdot DI}{P(\text{Objekt})}$$

W als Konstante ist also abhängig von den Wahrscheinlichkeiten, daß ein Objekt im Bild enthalten ist, bzw. der Wahrscheinlichkeit, daß kein Objekt im Bild enthalten ist. Diese Wahrscheinlichkeit wird mit P bezeichnet. Weiterhin geht in die Konstante W die Größe DI des zu erwartenden Helligkeitsintervalls für bewegte Objekte ein. Durch diese Abhängigkeiten der Schwelle th von der Varianz und von der Konstanten W wird ermöglicht, daß das Rauschen die Kontraständerungen, die Änderungen des Hintergrundes keinen Einfluß auf die Detektion haben, somit auch bewegte Objekte unter ungünstigen Bedingungen noch detektiert werden.

Die Schwelle kann auch in Abhängigkeit von der über alle Bildpunkte gemittelten Varianz in Abhängigkeit von der zu erwartenden Auftrittswahrscheinlichkeit für bewegte Objekte berechnet werden. Die Auftrittswahrscheinlichkeit für bewegte Objekte kann z.B. fortlaufend aus den zeitlich zurückliegenden Detektionsergebnissen ermittelt werden. Sie kann jedoch auch für verschiedene Bildbereiche unabhängig als Entwurfsparameter vorgegeben werden.

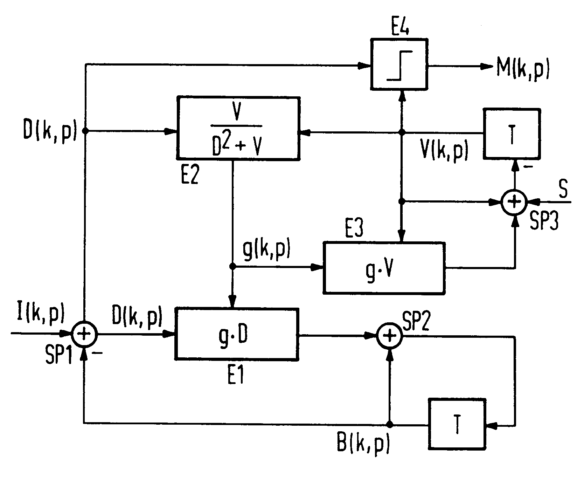

Figur 1 zeigt einen Ablaufplan zur Detektion bewegter ObjekteAus dem Bild I (k, p) und dem Referenzbild B (k, p) wird in einem Summierpunkt SP1 die Differenz D (k, p) gebildet. Zu Beginn wird dazu ein Anfangsreferenzbild verwendet, das vorgegeben ist. Das Differenzbild D wird nun einem Block E2 zugeleitet, der das Verhältnis des Varianzbildes zu der Summe aus Varianzbild und quadriertem Differenzbild erzeugt. Das Anfangsvarianzbild wird wiederum vorgegeben. Am Ausgang des Blockes E2 wird der Filterkoeffizient g (k, p) abgegeben, der nun dazu verwendet werden kann, um in einem Block E1 das Produkt aus dem Filterkoeffizienten und dem Differenzbild zu erzeugen. Das Ergebnis von g . D und das Referenzbild B (k, p) wird in einem weiteren Summierpunkt SP2 summiert und verzögert um eine Zeiteinheit durch das Verzögerungsglied T als neues Referenzbild dem Summierpunkt SP1 zugeführt. Dort wird es dann mit dem nächsten Bild verknüpft. Weiterhin wird der Filterkoeffizient dazu verwendet, um das nächste Varianzbild zu erzeugen. Dementsprechend wird g (k, p) einem Block E3 zugeleitet, der das Produkt aus g . V bildet. Die neue Varianz V wird dann mit Hilfe des Ausgangs des Blockes E3, der vorhergehenden Varianz und dem Kontrollparamter S durch den Summierpunkt SP3 erzeugt. Wiederum wird der Ausgang des Summierpunktes SP3 über ein Zeitglied T geführt, so daß die berechnete Varianz zeitrichtig für weitere rekursive Berechnungen zur Verfügung steht. Mit Hilfe der Varianz wird schließlich noch die Schwelle berechnet, die einem Schwellwertglied E4 zugeführt wird, das die Differenzbilder D binarisiert zu den Objektmasken M.

Das Verfahren kann auch mit Hilfe eines Programmes ausgeführt werden.

## Patentansprüche

1. Verfahren zur Bestimmung der momentanen Lage und Form von bewegten Objekten in einer zeitlichen Bildfolge (I) mit folgenden Merkmalen:

a) zu jedem Zeitpunkt k wird aus dem diesem Zeitpunkt entsprechenden Bild I(k) der Bildfolge (I) und aus dem diesem Zeitpunkt entsprechenden Bild B(k) einer Referenzbildfolge (B) ein Differenzbild D(k) nach der Formel

$$D(k) = I(k) - B(k)$$

gebildet;

b) die Referenzbildfolge (B) wird zeitlich rekursiv aus der Bildfolge (I) erzeugt, wobei das dem Zeitpunkt k + I entsprechende Referenzbild B(k+I) abhängt von

- dem Referenzbild B(k)

- dem Bild I(k) der Bildfolge (I)
- einer Varianz (V), die abhängig ist von dem in der Bildfolge (I) enthaltenen statistischen Rauschen,

c) zu jedem Zeitpunkt k wird unter Verwendung einer Schwelle (th) ein Binärbild M(k), welches die Lage und Form bewegter Objekte anzeigt, aus dem Differenzbild D(k) erzeugt,

d) die Referenzbildfolge wird durch ein zeitrekursives Filter erzeugt, dessen Filterkoeffizient (g) für jeden Bildpunkt und zu jedem Zeitpunkt abhängt von der quadrierten Differenzbildfolge und einer zeitlich rekursiv gebildeten Varianz (V), die abhängig ist von dem in der Bildfolge enthaltenen statistischen Rauschen, wobei die Anfangsvarianz einen vorgebbaren Anfangswert hat.

2. Verfahren nach Anspruch 1, **dadurch gekennzeichnet,** daß die Erzeugung der Referenzbilder (B) und der Differenzbilder (D) entsprechend den in Bildpunkten aufgelösten Bildern (I) punktweise erfolgt.

3. Verfahren nach einem der vorhergehenden Ansprüche, **dadurch gekennzeichnet,** daß als Filter ein Filter erster Ordnung verwendet wird.

4. Verfahren nach Anspruch 3, **dadurch gekennzeichnet,** daß der Filterkoeffizient (g) berechnet wird nach

$$g\,(k,\,p)\;=\;\frac{V\,(k,\,p)}{(D\,(k,p))^2\;+\;V\,(k,\,p)}$$

wobei ist:

$g\,(k,\,p) =$      Filterkoeffizient zum Zeitpunkt k für den p-ten Bildpunkt,

$V\,(k,\,p) =$      Varianz zum Zeitpunkt k für den p-ten Bildpunkt,

$D\,(k,\,p) =$      Differenzbild zum Zeitpunkt k für den p-ten Bildpunkt.

5. Verfahren nach einem der Ansprüche 1 bis 4, **dadurch gekennzeichnet,** daß die Varianz (V) aus einer rekursiv ermittelten Varianzbildfolge besteht, die abhängig ist von
einem früher ermittelten Varianzbild der Varianzbildfolge,
einem früher ermittelten Filterkoeffizienten (g),
einem Kontrollparameter (S) zur Steuerung der Adaptivität des Referenzbildes.

6. Verfahren nach Anspruch 5, **dadurch gekennzeichnet,** daß die Varianzbildfolge (V) zum Zeitpunkt k+l berechnet wird nach der Formel

$$V\,(k+l,\,p)\;=\;(l\,-\,g\,(k,\,p))\,.\,V\,(k,\,p)\;+\;S_k$$

wobei folgende Zuordnungen gelten:

$g\,(k,\,p) =$      Filterkoeffizient zum Zeitpunkt k für den p-ten Bildpunkt eines Bildes,

$V\,(k,\,p) =$      Varianzbild zum Zeitpunkt k für den p-ten Bildpunkt,

$S_k =$      Kontrollparameter zum Zeitpunkt k.

7. Verfahren nach Anspruch 6, **dadurch gekennzeichnet,** daß der Kontrollparameter (S) durch eine Mittelung der quadrierten Differenzbilder über alle Bildpunkte, in denen kein Bewegtobjekt festgestellt wurde, bestimmt wird.

8. Verfahren nach einem der Ansprüche 2 bis 4, **dadurch gekennzeichnet,** daß die Varianz (V) eine zeitlich rekursiv aus sich selbst und der Differenzbildfolge berechnete, über alle Bildpunkte gemittelte Varianz ist.

9. Verfahren nach einem der Ansprüche 2 bis 8, **dadurch gekennzeichnet,** daß die Referenzbildfolge (B) zum Zeitpunkt k+l berechnet wird nach der Formel

$$B\,(k+l,\,p)\;=\;B\,(k,\,p)\;+\;g\,(k,\,p)\,.\,(I\,(k,\,p)\,-\,B\,(k,\,p))$$

wobei folgende Zuordnungen gelten:

$B\,(k+l,\,p) =$      Referenzbild zum Zeitpunkt k+l für den p-ten Bildpunkt des Bildes,

$B\,(k,\,p) =$      Referenzbild zum Zeitpunkt k für den p-ten Bildpunkt,

$g\,(k,\,p) =$      Filterkoeffizient zum Zeitpunkt k für den p-ten Bildpunkt,

$I\,(k,\,p) =$      Bild zum Zeitpunkt k für den p-ten Bildpunkt.

10. Verfahren nach einem der vorhergehenden Ansprüche, **dadurch gekennzeichnet,** daß zur Erzeugung der Binärbildfolge die Differenzbildfolge quadriert und die quadrierte Differenzbildfolge mit Hilfe der Schwelle (th) binarisiert wird.

11. Verfahren nach Anspruch 10, **dadurch gekennzeichnet,** daß die Schwelle (th) einen konstanten vorgebbaren Wert hat.

**12.** Verfahren nach Anspruch 10, **dadurch gekennzeichnet,** daß die Schwelle (th) abhängig ist vom Varianzbild (V) und der zu erwartenden Auftrittswahrscheinlichkeit (W) für bewegte Objekte.

**13.** Verfahren nach Anspruch 12, **dadurch gekennzeichnet,** daß die Schwelle nach folgender Formel berechnet wird

$$th \ = \ 2. \ V \ (k, \ p) \ . \ \ln \left( \frac{W}{\sqrt{2\,\pi} \ . \ V \ (k, \ p)} \right)$$

mit folgender Zuordnung

V (k, p) =        Varianz zum Zeitpunkt k für den p-ten Bildpunkt,
W =        Auftrittswahrscheinlichkeit für bewegte Objekte.

**14.** Verfahren nach Anspruch 10, **dadurch gekennzeichnet,** daß die Schwelle (th) in Abhängigkeit von der über alle Bildpunkte gemittelten Varianz, in Abhängigkeit von der zu erwartenden Auftrittswahrscheinlichkeit (W) für bewegte Objekte berechnet wird.

**15.** Verfahren nach Anspruch 13 oder 14, **dadurch gekennnzeichnet,** daß die Auftrittswahrscheinlichkeit (W) berechnet wird nach

$$\frac{P(\text{kein Objekt}) \ . \ DI}{P \ (\text{kein Objekt})}$$

wobei P die Wahrscheinlichkeit eines Auftretens eines Objektes bzw. keines Objektes ist und DI das zu erwartende Helligkeitsintervall für bewegte Objekte.

**16.** Verfahren nach Anspruch 14, **dadurch gekennzeichnet,** daß die Auftrittswahrscheinlichkeit fortlaufend aus den zeitlich zurückliegenden Detektionsergebnissen ermittelt wird.

**17.** Verfahren nach Anspruch 14, **dadurch gekennzeichnet,** daß die Auftrittswahrscheinlichkeit für bewegte Objekte für verschiedene Bildbereiche unabhängig als Entwurfsparameter vorgegeben wird.

**Claims**

**1.** Process for determining the instantaneous position and shape of moving objects in a temporal image sequence (I), having the following features:

a) at any time k, a difference image D(k) is formed from that image I(k) of the image sequence (I) which corresponds to this time and from that image B(k) of a reference image sequence (B) which corresponds to this time, in accordance with the formula

$$D(k) \ = \ I(k) \ - \ B(k);$$

b) the reference image sequence (B) is generated recursively in time from the image sequence (I), the reference image B(k+1) corresponding to the time k+1 being dependent upon

- the reference image B(k)
- the image I(k) of the image sequence (I)
- a variance (V), which is dependent upon the statistical noise included in the image sequence (I),

c) at any time k, using a threshold (th) a binary image M(k) is generated from the difference image D(k), which binary image indicates the position and shape of moving objects,

d) the recursive image sequence is generated by a time-recursive filter, the filter coefficient (g) of which for each image point and at each time is dependent upon the squared difference image sequence and a variance (V), which is formed recursively in time and which is dependent upon the statistical noise included in the image sequence, the initial variance having a predeterminable initial value.

**2.** Process according to Claim 1, characterised in that the generation of the reference images (B) and of the difference images (D) takes place pointwise in accordance with the images (I) resolved into image points.

**3.** Process according to one of the preceding claims, characterised in that the filter employed is a first-order filter.

**4.** Process according to Claim 3, characterised in that the filter coefficient (g) is computed according to

$$g \ (k, \ p) \ = \ \frac{V \ (k, \ p)}{(D \ (k, \ p))^2 \ + \ V \ (k, \ p)}$$

in which:

g (k, p) =          filter coefficient at the time k for the p-th image point,
V (k, p) =          variance at the time k for the p-th image point,
D (k, p) =          difference image at the time k for the p-th image point.

5. Process according to one of Claims 1 to 4, characterised in that the variance (V) consists of a recursively determined variance image sequence, which is dependent upon a previously determined variance image of the variance image sequence,
a previously determined filter coefficient (g),
a check parameter (S) to control the adaptivity of the reference image.

6. Process according to Claim 5, characterised in that the variance image sequence (V) at the time k+I is computed according to the formula

$$V (k + 1, p) = (1 - g (k, p)) \cdot V (k, p) + S_k$$

in which the following correlations are applicable:
g (k, p) =          filter coefficient at the time k for the p-th image point of an image,
V (k, p) =          variance image at the time k for the p-th image point,
$S_k$ =          check parameter at the time k.

7. Process according to Claim 6, characterised in that the check parameter (S) is determined by an averaging of the squared difference images over all image points in which no moving object was detected.

8. Process according to one of Claims 2 to 4, characterised in that the variance (V) is a variance which is computed recursively in time from itself and the difference image sequence and which is averaged over all image points.

9. Process according to one of Claims 2 to 8, characterised in that the reference image sequence (B) at the time k+1 is computed in accordance with the formula

$$B (k + 1, p) = B (k, p) + g (k, p) \cdot (I (k, p) - B (k, p))$$

in which the following correlations are applicable:
B (k+1, p) =          reference image at the time k+1 for the p-th image point of the image,
B (k, p) =          reference image at the time k for the p-th image point,
g (k, p) =          filter coefficient at the time k for the p-th image point,
I (k, p) =          image at the time k for the p-th image point.

10. Process according to one of the preceding claims, characterised in that in order to generate the binary image sequence the difference image sequence is squared and the squared difference image sequence is binarized with the aid of the threshold (th).

11. Process according to Claim 10, characterised in that the threshold (th) has a constant predeterminable value.

12. Process according to Claim 10, characterised in that the threshold (th) is dependent upon the variance image (V) and the probability of occurrence (W) to be expected for moving objects.

13. Process according to Claim 12, characterised in that the threshold is computed in accordance with the following formula

$$th = 2 \cdot V (k, p) \cdot 1n \left( \frac{W}{\sqrt{2\pi} \cdot V (k, p)} \right)$$

with the following correlation
V (k, p) =          variance at the time k for the p-th image point,
W =          probability of occurrence for moving objects.

14. Process according to Claim 10, characterised in that the threshold (th) is computed in dependence upon the variance averaged over all image points, in dependence upon the probability of occurrence (W) to the expected for moving objects.

15. Process according to claim 13 or 14, characterized in that the probability of occurance (W) is computed as

$$\frac{\text{p (no object) . DI}}{\text{p (object)}}$$

where p is the probability of the occurance of an object or no object respectively and DE is the expected interval of intensity for moving objects.

16. Process according to Claim 14, characterised in that the probability of occurrence is determined progressively from the temporally preceding detection results.

17. Process according to Claim 14, characterised in that the probability of occurrence for moving objects for various image regions is predetermined independently as a design parameter.


**Revendications**

1. Procédé pour déterminer la position et la forme instantanées d'objets en mouvements dans une succession temporelle d'images (I), présentant les caractéristiques suivantes :

a) à chaque instant k, une image différentielle D(k) est formée à partir de l'image I(k), qui correspond à cet instant, de la suite d'images (I) et à partir de l'image B(k), qui correspond à cet instant, d'une suite d'images de référence (B) conformément à la formule

$$D(k) = I(k) - B(k);$$

b) la suite d'images de référence (B) est produite d'une manière récursive dans le temps à partir de la suite d'images (I), l'image de référence B(k+1), qui correspond à l'instant k+1, dépendant
   - de l'image de référence B(k),
   - de l'image B(k) de la suite d'images (I),
   - d'une variance (V), qui dépend du bruit statistique contenu dans la suite d'images (I),

c) à un instant k, une image binaire M(k), qui indique la position et la forme d'objets en déplacement, est formée à partir de l'image différentielle D(k), moyennant l'utilisation d'un seuil (th),

d) la suite d'images de référence est formée par un filtre récursif dans le temps, dont le coefficient (g) pour chaque point d'image et à chaque instant dépend de la suite d'images différentielles, élevées au carré, et d'une variance (V) formée de façon récursive dans le temps et qui dépend du bruit statistique contenu dans la suite d'images, la variance initiale possédant une valeur initiale pouvant être prédéterminée.

2. Procédé suivant la revendication 1, caractérisé par le fait que la production des images de référence (B) et des images différentielles (D) s'effectue point par point, en fonction des images (I) subdivisées en points d'image.

3. Procédé suivant l'une des revendications précédentes, caractérisé par le fait qu'on utilise comme filtre un filtre du premier ordre.

4. Procédé suivant la revendication 3, caractérisé par le fait que le coefficient de filtre (g) est calculé conformément à :

$$g(k, p) = \frac{V(k, p)}{(D(k,p))^2 + V(k, p)}$$

avec :
g (k, p) = coefficient de filtre à l'instant k pour le p-ème point d'image,
V (k, p) = variance à l'instant k pour le p-ème point d'image,
D (k, p) = image différentielle à l'instant k pour le p-ème point d'image.

5. Procédé suivant l'une des revendications 1 à 4, caractérisé par le fait que la variance (V) est constituée par une suite d'images de variance déterminée de façon récursive et qui dépend
d'une image de variance, déterminée antérieurement, de la suite d'images de variance,
d'un coefficient de filtre (g) déterminé antérieurement,
d'un paramètre de contrôle (S) servant à commander le caractère adaptatif de l'image de référence.

6. Procédé suivant la revendication 5, caractérisé par le fait que la suite d'images de variance (V) est calculée à l'instant k+1 conformément à la formule

$$V(k + 1, p) = (1 - g(k, p)) . V(k, p) + S_k$$

avec les associations suivantes :

g (k, p) =       coefficient de filtre à l'instant k pour le p-ème point d'une image,

V (k, p) =       image de variance à l'instant k pour le p-ème point d'image,

$S_k$ =       paramètre de contrôle à l'instant k.

7. Procédé suivant la revendication 6, caractérisé par le fait que le paramètre de contrôle (S) est déterminé par formation de la moyenne des images différentielles élevées au carré, pour tous les points d'image, au niveau desquels aucun objet en déplacement n'a été détecté.

8. Procédé suivant l'une des revendications 2 à 4, caractérisé par le fait que la variance (V) est une variance qui est calculée d'une manière récursive dans le temps à partir d'elle-même et de la suite d'images différentielles et dont la moyenne est formée sur tous les points d'image.

9. Procédé suivant l'une des revendications 2 à 8, caractérisé par le fait que la suite d'images de référence (B) est calculée à l'instant (k+1) conformément à la formule

$$B (k + 1, p) = B (k, p) + g (k, p) \cdot (I (k, p) - B (k, p))$$

avec les associations suivantes :

B (k+1, p) =       image de référence à l'instant k+1 pour le p-ème point de l'image,

B (k, p) =       image de référence à l'instant k pour le p-ème point d'image,

g (k, p) =       coefficient de filtre à l'instant k pour le p-ème point d'image,

I (k, p) =       image à l'instant k pour le p-ème point d'image.

10. Procédé suivant l'une des revendications précédentes, caractérisé par le fait que pour la production de la suite d'images binaires, la suite d'images différentielles est élevée au carré et la suite d'images différentielles élevée au carré est mise sous forme binaire à l'aide du seuil (th).

11. Procédé suivant la revendication 10, caractérisé par le fait que seuil (th) possède une valeur constante pouvant être prédéterminée.

12. Procédé suivant la revendication 10, caractérisé par le fait que le seuil (th) dépend de l'image de variance (V) et de la probabilité d'apparition (W), à laquelle on peut s'attendre, pour des objets en déplacement.

13. Procédé suivant la revendication 12, caractérisé par le fait que le seuil est calculé conformément à la formule suivante

$$th = 2 \cdot V (k, p) \cdot \ln \left( \frac{W}{\sqrt{2\pi} \cdot V (k, p)} \right)$$

avec l'association suivante

V (k, p) =       variance à l'instant k pour le p-ème point d'image,

W =       probabilité d'apparition pour des objets en déplacement.

14. Procédé suivant la revendication 10, caractérisé par le fait que le seuil (th) est calculé en fonction de la variance dont la moyenne est formée sur tous les points d'image, en fonction de la probabilité d'apparition (W) à laquelle on peut s'attendre, pour des objets en déplacement.

15. Procédé suivant la revendication 13 ou 14, caractérisé par le fait que la probabilité d'apparition (W) se calcule conformément à la formule

$$\frac{P(\text{aucun objet}) \cdot DI}{P(\text{aucun objet})}$$

P représentant la probabilité d'apparition d'un objet ou d'aucun objet et DI l'intervalle d'éclairement, auquel on peut s'attendre, pour des objets en déplacement.

16. Procédé suivant la revendication 14, caractérisé par le fait que la probabilité d'apparition est déterminée en permanence à partir des résultats de détection qui sont obtenus dans le temps.

17. Procédé suivant la revendication 14, caractérisé par le fait que la probabilité d'apparition pour des objets en déplacement pour différentes zones de l'image est prédéterminée d'une manière indépendante en tant que paramètre théorique.

$$\frac{V}{D^2 + V}$$

E2

E4

M(k,p)

D(k,p)

T

V(k,p)

S

SP3

g(k,p)

E3

g·V

I(k,p)

D(k,p)

g·D

SP2

SP1

E1

T

B(k,p)